# EUROPÄISCHE PATENTSCHRIFT

(11) **EP 3 054 548 B1**
(45) Veröffentlichungstag und Bekanntmachung des Hinweises auf die Patenterteilung: **03.07.2019**
(21) Anmeldenummer: 16152856.7
(22) Anmeldetag: 27.01.2016
(51) Int. Cl.: H02J 1/10, H02J 7/34

(54) **STEUERVORRICHTUNG FÜR EIN MEHRSPANNUNGSBORDNETZ**
CONTROL DEVICE FOR A MULTI-VOLTAGE ONBOARD ELECTRIC SYSTEM
DISPOSITIF DE COMMANDE D'UN RESEAU DE BORD MULTI-TENSIONS

(30) Priorität: 03.02.2015 DE 102015201869
(43) Veröffentlichungstag der Anmeldung: 10.08.2016
(73) Patentinhaber: Brose Fahrzeugteile GmbH & Co. Kommanditgesellschaft, Bamberg, 96052 Bamberg (DE)
(72) Erfinder: DREMEL, Benedikt, 96135 Stegaurach (DE); MIJAC, Anto, 97475 Zeil am Main (DE)
(74) Vertreter: Maikowski & Ninnemann Patentanwälte Partnerschaft mbB

(56) Entgegenhaltungen:
- EP-A2- 1 302 371
- DE-A1-102013 012 615
- US-A1- 2011 264 326

## Beschreibung

Die vorliegende Erfindung betrifft eine Steuervorrichtung für ein Mehrspannungsbordnetz eines Fahrzeugs gemäß dem Oberbegriff des Patentanspruchs 1.

Gelegentlich wird ein Fahrzeug, beispielsweise ein PKW, LKW, ein Zug etc., mit einem Mehrspannungsnetz ausgestattet. Das Mehrspannungsbordnetz umfasst wenigstens ein erstes Teilnetz und ein zweites Teilnetz. Das erste Teilnetz ist ausgebildet, von einer ersten Spannungsversorgungsquelle mit einer ersten Versorgungsspannung, beispielsweise 12 V, betrieben zu werden. Das zweite Teilnetz ist ausgebildet, von einer zweiten Spannungsversorgungsquelle mit einer zweiten Versorgungsspannung, beispielsweise 48 V, betrieben zu werden.

In einem derartigen Mehrspannungsbordnetz kommt gelegentlich eine Steuervorrichtung zum Einsatz, die sowohl an das erste Teilnetz als auch an das zweite Teilnetz gekoppelt sein kann. Innerhalb der Steuervorrichtung sind folglich beide Spannungsebenen der beiden Teilnetze präsent.

Beispielsweise umfasst eine derartige Steuervorrichtung einen Sendeempfänger, der über einen ersten Masseanschluss auf Masse, beispielsweise Fahrzeugmasse, geschaltet ist und der ausgebildet ist zum Kommunizieren mit einer Kommunikationskomponente des ersten Teilnetzes. Beispielsweise umfasst ein solcher Sendeempfänger einen sogenannten Local Interconnect Network (LIN) Transceiver.

Außerdem kann eine derartige Steuervorrichtung eine Steuereinheit umfassen, die über einen zweiten Masseanschluss des zweiten Teilnetzte auf Masse, beispielsweise Fahrzeugmasse, geschaltet ist und die ausgebildet ist zum Steuern einer Leistungskomponente des zweiten Teilnetzes.

Da, wie gesagt, in einer derartigen Steuervorrichtung mehrere Spannungsebenen vorhanden sein können, kann es erforderlich sein, dass gewisse Komponenten der Steuervorrichtung eine Spannungsfestigkeit aufweisen, die dem höheren der beiden Spannungsniveaus Rechnung trägt. Ferner können aufgrund der Kopplung zwischen den beiden Teilnetzen HF-Störungen des einen Teilnetzes in das andere Teilnetz übertragen werden.

Die Druckschrift DE 10 2013 012 615 A1 offenbart eine Steuervorrichtung für ein Mehrspannungsbordnetz gemäß dem Oberbegriff des Anspruchs 1.

Die Druckschrift EP 1 302 371 A2 offenbart ein 14V / 42V Mehrspannungsbordnetz. Die 42V-Bordspannung wird von einer ersten Batterie bereitgestellt und die 14V-Bordspannung von einer zweiten Batterie. Einige Verbraucher beziehen ihre Energie ausschließlich über die 14V-Batterie und andere Verbraucher, nämlich elektromotorischen Bremsen, beziehen ihre Energie über die 42V-Batterie als auch über die 14V-Batterie. Zur Steuerung der Bremsen sind Einheiten mit Mikrocontrollern vorgesehen. In diesen Einheiten erfolgt eine sog. Entkopplung jener Leitung, die die Energie der 42V-Batterie führt, von einer anderen Leitung, die die Energie der 14V-Batterie führt. Vorgesehen ist ferner eine Steuereinheit "Energie- und Bremsmanagement". Die Steuereinheit "Energie- und Bremsmanagement" erfasst Signale von Betriebszustandserkennungen BZE der beiden Batterien. Außerdem steuert diese Einheit die elektromotorischen Bremsen. Dabei kann die Steuereinheit ihre Leistung sowohl über die erste Batterie als auch über die zweite Batterie beziehen.

Die Druckschrift US 2011 / 264326 A1 beschreibt ein anderes Mehrspannungsbordnetz. Dort sind zwei Spannungsquellen vorgesehen, die beide Leistung für den Antrieb einer Servolenkung bereitstellen sollen. Zur Steuerung der Servolenkung ist eine Steuereinheit installiert. Einerseits ist die Steuereinheit über eine Masseleitung auf Masse geschaltet. Andererseits bezieht die Steuereinheit ihre Energie sowohl von der ersten Quelle über eine erste Leitung als auch von der zweiten Quelle über eine zweite Leitung.

Gemäß einem ersten Aspekt wird die Steuervorrichtung des unabhängigen Patentanspruchs 1 vorgeschlagen.

Merkmale vorteilhafter Ausführungsformen sind in den Unteransprüchen angegeben. Die durch die Unteransprüche definierten Merkmale können miteinander zur Bildung weiterer Ausführungsbeispiele kombiniert werden, sofern sie nicht ausdrücklich als alternativ zueinander beschrieben werden.

Erfindungsgemäss wird die Steuereinheit wenigstens auch von der ersten Spannungsversorgungsquelle mit Energie versorgt und die beiden Masseanschlüsse sind getrennt voneinander angeordnet. Beispielsweise wird die Steuereinheit ausschließlich von der ersten Spannungsversorgungsquelle mit Energie versorgt. Bei einer Ausführungsform werden also der Sendeempfänger und die Steuereinheit gleichzeitig von der ersten Spannungsversorgungsquelle mit Energie versorgt.

Auf diese Weise können günstigere Bauteile mit niedriger Spannungsfestigkeit verwendet werden. Darüber hinaus kann die Steuereinheit auch dann operieren, wenn die zweite Spannungsversorgungsquelle des zweiten Teilnetzes abgeschaltet oder defekt ist.

Gemäß einem weiteren Aspekt umfasst eine Steuervorrichtung einen ersten Versorgungskontakt zum Empfangen der ersten Versorgungsspannung, einen zweiten Versorgungskontakt zum Empfangen der zweiten Versorgungsspannung, einen ersten Massekontakt, der mit dem ersten Masseanschluss verbunden ist und einen zweiten Massekontakt, der mit dem zweiten Masseanschluss verbunden ist. Zusätzlich umfasst die Steuervorrichtung eine Filtereinrichtung, wobei die Filtereinrichtung über einen Filterspannungsanschluss an den ersten Versorgungskontakt angeschlossen ist und über einen Filtermasseanschluss an den zweiten Massekontakt angeschlossen ist. Alternativ ist die Filtereinrichtung über den Filterspannungsanschluss an den zweiten Versorgungskontakt angeschlossen ist und über einen Filtermasseanschluss an den ersten Massekontakt angeschlossen.

Die Filtereinrichtung, die beispielsweise als Tiefpassfilter ausgebildet ist, bildet eine filternde Kopplung zwischen den beiden Teilnetzen aus. Damit werden die EMV-Eigenschaften der Steuervorrichtung verbessert, womit beispielsweise kleiner dimensionierte Bauteile und Komponenten für die Steuervorrichtung verwendet werden können.

Die Merkmale der erfindungsgemässen Steuervorrichtung und der Steuervorrichtung des weiteren Aspektes können miteinander kombiniert werden. Nachfolgend werden weitere optionale Merkmale erläutert. Diese Merkmale können sowohl bei der erfindungsgemässen Steuervorrichtung als auch bei der Steuervorrichtung des weiteren Aspektes vorgesehen werden, sofern dies nicht ausdrücklich ausgeschlossen wird. Daher ist nachstehend stets von "der Steuervorrichtung" die Rede, die sowohl die erfindungsgemässe Steuervorrichtung und/oder die Steuervorrichtung des weiteren Aspektes sein kann. Bei einer Ausführungsform der Steuervorrichtung umfasst die Steuereinheit einen Mikrocontroller. Beispielsweise ist die Steuereinheit ausgebildet, eine Leistungskomponente des zweiten Teilnetzes, wie beispielsweise einen Treiber für einen Umrichter, einen Umrichter und/oder einen elektrischen Motor zu steuern. Beispielsweise werden der Treiber, der Umrichter und/oder der elektrische Motor von der zweiten Spannungsversorgungsquelle mit Energie versorgt. Der Umrichter wandelt z.B. die zweite Versorgungsspannung in Abhängigkeit von Treiberausgangssignalen in eine Ausgangswechselspannung, die dem Motor zugeführt wird.

Der Sendeempfänger umfasst beispielsweise einen LIN-Transceiver. Der Sendeempfänger kann ausgebildet sein, mit einer Kommunikationskomponente des ersten Teilnetzes zu kommunizieren, beispielsweise eine außerhalb der Steuervorrichtung angeordneten LIN-Kommunikationskomponente.

Beispielsweise ist die zweite Versorgungsspannung größer als die erste Versorgungsspannung. Bei der ersten Spannungsversorgungsquelle kann es sich um eine Batterie handeln, die eine Gleichspannung bereitstellt, beispielsweise eine Gleichspannung von etwa 12 V. Anstelle der Batterie kann auch eine andere Spannungsversorgungsquelle, wie beispielsweise ein leistungselektronischer Gleichrichter, vorgesehen sein. Bei der zweiten Spannungsversorgungsquelle handelt es sich beispielsweise um eine zweite Batterie, die die zweite Versorgungsspannung bereitstellt, beispielsweise eine zweite Versorgungsspannung von etwa 48 V. Anstelle der zweiten Batterie kann ebenfalls ein anderes Mittel bereitgestellt werden, das die zweite Versorgungsspannung produziert, beispielsweise ein weiterer leistungselektronischer Gleichrichter.

Die beiden Masseanschlüsse sind voneinander getrennt angeordnet. Bei den Masseanschlüssen kann es sich beispielsweise um Massebolzen handeln. Beide Masseanschlüsse können jedoch auf eine gemeinsame selbe Masse geschaltet sein, beispielsweise die Fahrzeugmasse, die durch die Fahrzeugkarosserie gebildet sein kann. Die beiden Masseanschlüsse können sich insbesondere außerhalb der Steuervorrichtung befinden.

Die Steuervorrichtung kann einen ersten Massekontakt aufweisen, der mit dem ersten Masseanschluss verbunden ist und einen zweiten Massekontakt, der mit dem zweiten Masseanschluss verbunden ist. Diese beiden Massekontakte sind beispielsweise an einem Gehäuse der Steuervorrichtung angeordnet. Mit anderen Worten empfängt der erste Massekontakt das Potential des ersten Masseanschlusses und der zweite Massekontakt empfängt das Potential des zweiten Masseanschlusses. Da die beiden Masseanschlüsse getrennt voneinander angeordnet sein können, weisen sie nicht notwendigerweise stets das exakt selbe Potential auf.

Zum Empfangen der ersten Versorgungsspannung und zum Empfangen der zweiten Versorgungsspannung können bei der Steuervorrichtung entsprechende Versorgungskontakte vorgesehen sein, von denen ein erster Versorgungskontakt mit der ersten Spannungsversorgungsquelle verbunden ist und ein zweiter Versorgungskontakt mit der zweiten Spannungsversorgungsquelle verbunden ist. Mit anderen Worten empfängt der erste Versorgungskontakt die erste Versorgungsspannung und der zweite Versorgungskontakt empfängt die zweite Versorgungsspannung. Anstelle der unmittelbar von der Spannungsversorgungsquellen produzierten Versorgungsspannungen selbst können auch daraus abgeleitete Versorgungsspannungen empfangen werden, die beispielsweise von der Steuervorrichtung vorgeschalteten Spannungswandlern produziert werden. Also erfolgt bei einer Ausführungsform die Versorgung mit Energie der ersten Spannungsversorgungsquelle über den ersten Versorgungskontakt und die Versorgung mit Energie der zweiten Spannungsversorgungsquelle über den zweiten Versorgungskontakt der Steuervorrichtung.

Die Steuereinheit der Steuervorrichtung kann einen ersten Masseport umfassen, der auf den zweiten Masseanschluss geschaltet ist. Eine derartige elektrische Verbindung kann insbesondere den zweiten Massekontakt der Steuervorrichtung umfassen.

Ferner kann die Steuereinheit der Steuervorrichtung einen ersten Versorgungsport umfassen, der über einen ersten Versorgungspfad mit der ersten Spannungsversorgungsquelle verbunden sein kann. Diese Verbindung kann insbesondere den ersten Versorgungskontakt der Steuervorrichtung umfassen. Mittels des ersten Versorgungspfads wird der Steuereinheit der Steuervorrichtung also Energie der ersten Spannungsversorgungsquelle zur Verfügung gestellt.

In ähnlicher Weise kann der Sendeempfänger einen zweiten Masseport umfassen, der auf den ersten Masseanschluss geschaltet ist. Eine derartige elektrische Verbindung kann insbesondere besagten ersten Massekontakt der Steuervorrichtung umfassen. Ferner kann der Sendeempfänger der Steuervorrichtung einen zweiten Versorgungsport umfassen, der über einen weiteren Versorgungspfad ebenfalls mit der ersten Spannungsversorgungsquelle verbunden sein kann. Diese Verbindung kann insbesondere ebenfalls den ersten Versorgungskontakt der Steuervorrichtung umfassen.

Innerhalb des ersten Versorgungspfads, über den die Versorgung der Steuereinheit erfolgt, kann ein Spannungswandler vorgesehen sein, der ausgebildet ist, die erste Versorgungsspannung zu empfangen und in eine Betriebsspannung für die Steuereinheit zu wandeln und diese Betriebsspannung am ersten Versorgungsport der Steuereinheit bereitzustellen. Beispielsweise wandelt der Spannungswandler die erste Versorgungsspannung von beispielsweise 12 V in die Betriebsspannung von beispielsweise 5 V oder 3,3 V, also in eine Spannung, die für einen Mikrocontroller geeignet ist. Insbesondere kann der Spannungswandler auf den zweiten Masseanschluss geschaltet sein. Eine derartige elektrische Verbindung kann insbesondere den zweiten Massekontakt der Steuervorrichtung erfolgen. Der Spannungswandler ist beispielsweise ein Geleichspannungswandler.

Bei einer weiteren Ausführungsform umfasst der erste Versorgungspfad eine Diode. Beispielsweise ist die Diode derart in dem ersten Versorgungspfad angeordnet, dass ein Anodenanschluss der Diode die erste Versorgungsspannung empfängt.

Beispielsweise ist zusätzlich zur Diode besagter Spannungswandler vorgesehen, der beispielsweise der Diode nachgeschaltet ist. Ein Eingang des Spannungswandlers kann also beispielsweise mit einem Kathodenanschluss der Diode verbunden sein und ein Ausgang des Spannungswandlers kann mit dem ersten Versorgungsport der Steuereinheit verbunden sein.

Bei einer weiteren Ausführungsform ist in dem ersten Versorgungspfad eine Trennvorrichtung vorgesehen, wobei die Trennvorrichtung ausgebildet ist, einen Stromfluss im ersten Versorgungspfad wenigstens in einer Stromrichtung zu sperren. Auf diese Weise kann verhindert werden, dass über den ersten Versorgungspfad Energie in das erste Teilnetz fließt, wodurch im Ergebnis die Robustheit der Steuervorrichtung erhöht werden kann. Insbesondere kann vorgesehen sein, dass die Trennvorrichtung besagte Diode umfasst oder durch die Diode gebildet ist. Anstelle der Diode kann jedoch auch eine andere anders geartete Trennvorrichtung vorgesehen sein, beispielsweise eine galvanische Trennung oder ähnliches. Die Diode hat jedoch den Vorteil, dass diese bereits ausgebildet ist, den Stromfluss im ersten Versorgungspfad in die wenigstens eine Stromrichtung zu sperren.

Bei einer weiteren Ausführungsform der Steuervorrichtung des ersten Aspektes ist zusätzlich besagte Filtereinrichtung vorgesehen, wobei die Filtereinrichtung entweder über einen Filterspannungsanschluss an dem ersten Versorgungskontakt angeschlossen ist und über einen Filtermasseanschluss an den zweiten Massekontakt angeschlossen ist oder über den Filterspannungsanschluss an den zweiten Versorgungskontakt angeschlossen ist und über den Filtermasseanschluss an dem ersten Massekontakt angeschlossen ist.

Die Filtereinrichtung, die wahlweise innerhalb und/oder außerhalb der Steuervorrichtung installiert sein kann, schafft eine filternde Kopplung zwischen dem ersten Teilnetz und dem zweiten Teilnetz, die hochfrequente Störungen, im Folgenden als HF-Störungen bezeichnet, zwischen dem ersten Teilnetz und dem zweiten Teilnetz dämpfen kann, insbesondere solche, die durch eine HF-Quelle der Steuervorrichtung induziert worden sind. Eine solche HF-Quelle kann insbesondere die Steuereinheit selbst bilden, besagter Treiber, besagter Umrichter und/oder besagter elektrischer Motor.

Bei einer Ausführungsform ist die Filtereinrichtung als Tiefpassfilter ausgebildet, die Frequenzen oberhalb von 100 kHz, beispielsweise oberhalb von 150 kHz dämpft.

Beispielsweise umfasst die Filtereinrichtung einen Kondensator, wobei ein erster Elektrodenanschluss des Kondensators auf den ersten Versorgungskontakt der Steuervorrichtung geschaltet sein kann, und wobei ein zweiter Elektrodenanschluss des Kondensators auf den zweiten Massekontakt der Steuervorrichtung geschaltet sein kann. Ferner kann eine Spule vorgesehen sein, die beispielsweise in Serie zum Kondensator geschaltet ist.

Weitere Merkmale und Vorteile der Erfindung werden bei der nachfolgenden Beschreibung von Ausführungsbeispielen anhand der Figuren deutlich. Es zeigen:
- Fig. 1: eine schematische und exemplarische Darstellung eines Teils eines Mehrspannungsbordnetzes mit einer Steuervorrichtung gemäß einer oder mehreren Ausführungsformen;
- Fig. 2: eine schematische und exemplarische Darstellung eines Teils eines Mehrspannungsbordnetzes mit Teilen einer Steuervorrichtung gemäß einer oder mehreren Ausführungsformen.

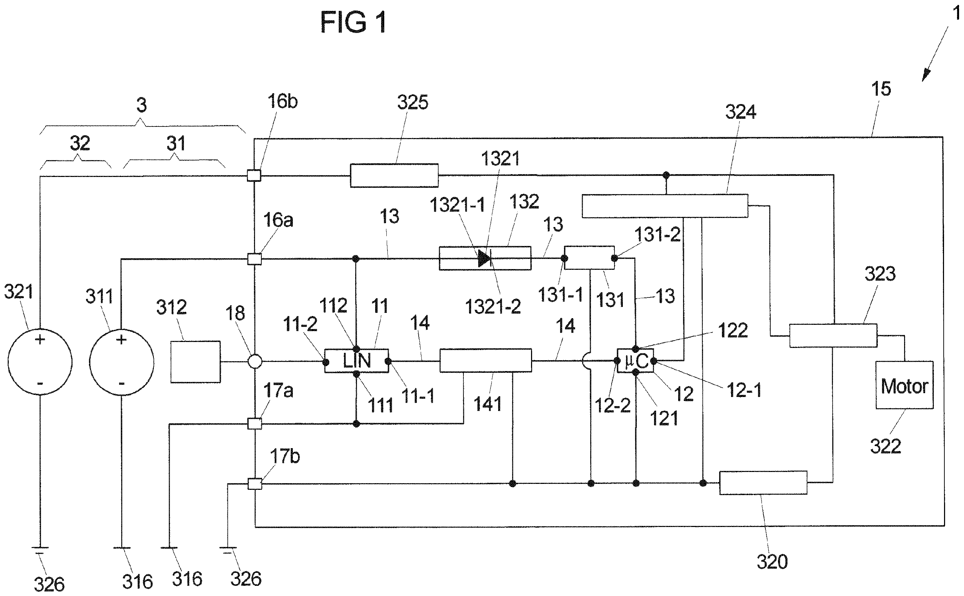

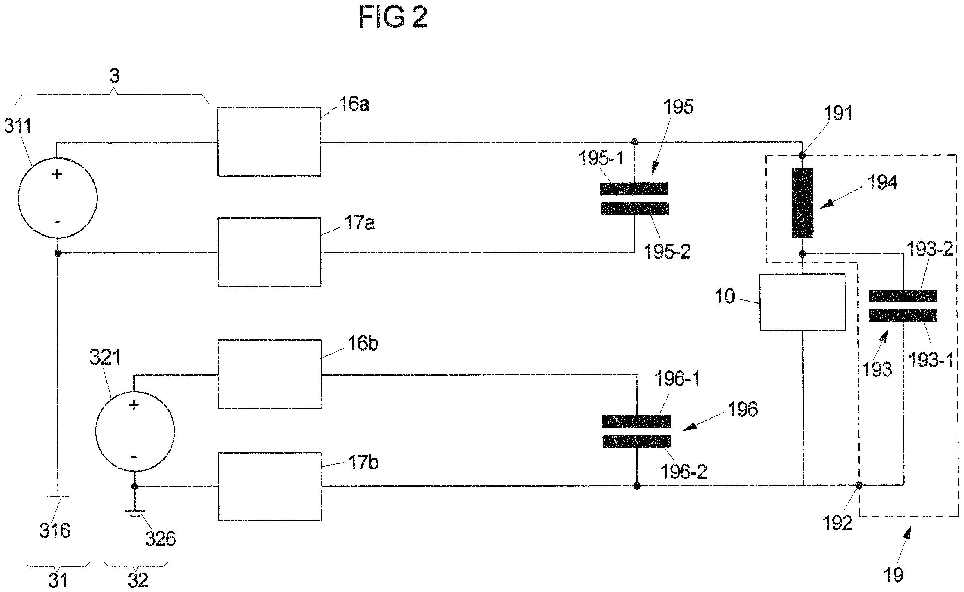

Die Fig. 1 zeigt eine schematische und exemplarische Darstellung eines Teils eines Mehrspannungsbordnetzes 3 mit einer Steuervorrichtung 1 gemäß einer oder mehrerer Ausführungsformen und die Fig. 2 zeigt ebenfalls eine schematische und exemplarische Darstellung eines Teils eines Mehrspannungsbordnetzes 3 mit Teilen einer Steuervorrichtung 1 gemäß einer oder mehrerer Ausführungsformen. Nachstehend wird sowohl auf die Fig. 1 als auch auf die Fig. 2 Bezug genommen.

Das Mehrspannungsbordnetz 3 umfasst wenigstens ein erstes Teilnetz 31 und ein zweites Teilnetz 32. Das erste Teilnetz 31 ist ausgebildet, von einer ersten Spannungsversorgungsquelle 311 betrieben zu werden. Das zweite Teilnetz 32 ist ausgebildet, von einer zweiten Spannungsversorgungsquelle 321 betrieben zu werden.

Die erste Spannungsversorgungsquelle 311 stellt beispielweise eine Gleichspannung bereit, beispielsweise eine Gleichspannung von 12 V. Die zweite Spannungsversorgungsquelle 321 stellt beispielsweise ebenfalls eine Gleichspannung bereit, beispielsweise eine Gleichspannung von 48 V.

Die erste Spannungsversorgungsquelle 311 kann beispielsweise eine Batterie umfassen und/oder einen leistungselektronischen Gleichrichter. Die zweite Spannungsversorgungsquelle 321 kann ebenfalls eine Batterie umfassen und/oder einen weiteren leistungselektronischen Gleichrichter.

Die erste Spannungsversorgungsquelle 311 ist über einen ersten Masseanschluss 316 auf Masse geschaltet, beispielsweise Fahrzeugmasse (in den Figuren nicht dargestellt). Die zweite Spannungsversorgungsquelle 321 ist über einen zweiten Masseanschluss 326, der von den ersten Masseanschluss 316 getrennt angeordnet sein kann, auf dieselbe Masse geschaltet. Beispielsweise umfassen die beiden Masseanschlüsse 316 und 326 entsprechende Massebolzen.

Einige Komponenten der Steuervorrichtung 1 sind beispielsweise innerhalb eines Gehäuses 15 der Steuervorrichtung 1 integriert. Die Steuervorrichtung 1 umfasst folgende Kontakte, die beispielsweise an dem Gehäuse 15 angeordnet sind: einen ersten Massekontakt 17a, der auf den ersten Masseanschluss 316 geschaltet ist, einen zweiten Massekontakt, der auf den zweiten Masseanschluss 326 geschaltet ist, einen ersten Versorgungskontakt 16a, der mit der ersten Spannungsversorgungsquelle 311 verbunden ist und einen zweiten Versorgungskontakt 16b, der mit der zweiten Spannungsversorgungsquelle 321 verbunden ist. Ferner kann eine Anzahl von Kommunikationssignalkontakten 18 vorgesehen sein, die mit einer Kommunikationskomponente 312 des ersten Teilnetzes 31 verbunden sind.

Die Kommunikationskomponente 312 des ersten Teilnetzes kann beispielsweise eine LIN-Kommunikationskomponente sein. Diese Kommunikationskomponente 312 stellt beispielsweise Kommunikationssignale entsprechend dem LIN-Standard bereit.

Die Steuervorrichtung 1 umfasst einen Sendeempfänger 11 und eine Steuereinheit 12, die beide innerhalb des Gehäuses 15 angeordnet sein können.

Der Sendeempfänger 11 ist ausgebildet, mit der Kommunikationskomponente 312 des ersten Teilnetzes 31 zu kommunizieren. Beispielsweise ist der Sendeempfänger 11 dazu mit der Kommunikationskomponente 312 über die Anzahl von Kommunikationssignalkontakten 18 verbunden. Beispielsweise empfängt der Sendeempfänger 11 besagte Kommunikationssignale über einen ersten Signaleingang 11-2. Der Sendeempfänger 11 kann also dem ersten Teilnetz 31 zugeordnet sein.

Der Sendeempfänger 11 kann einen LIN-Transceiver umfassen. Insbesondere kann der Sendeempfänger 11 ein LIN-Transceiver sein.

Über einen zweiten Versorgungsport 112, z.B. ein Pin eines LIN-Transceivers, empfängt der Sendeempfänger 11 die erste Versorgungsspannung, die von der ersten Spannungsversorgungsquelle 311 bereitgestellt wird, oder eine davon abgeleitete Spannung. Der entsprechende Versorgungspfad, der den zweiten Versorgungsport 112 des Sendeempfängers 11 mit der ersten Spannungsversorgungsquelle 311 verbindet, beinhaltet den ersten Versorgungskontakt 16a der Steuervorrichtung 1. Andererseits ist der Sendeempfänger 11 über einen zweiten Masseport 111, z.B. ein weiterer Pin eines LIN-Transceivers, auf den ersten Masseanschluss 316 geschaltet. Der entsprechende Leitungspfad beinhaltet insbesondere den ersten Massekontakt 17a.

Die Steuereinheit 12 ist operativ an den Sendeempfänger 11 gekoppelt und ist ausgebildet zum Steuern einer Leistungskomponente des zweiten Teilnetzes 32. Diese Leistungskomponente des zweiten Teilnetzes 32 kann einen Motor 322, einen Umrichter 323 und/oder einen Treiber 324 umfassen. Besagte Leistungskomponenten 322, 323 und 324 können innerhalb des Gehäuses 15 der Steuervorrichtung 1 angeordnet sein oder außerhalb davon. Diese Leistungskomponenten werden insbesondere von der zweiten Spannungsversorgungsquelle 321 mit Energie versorgt und sind dem zweiten Teilnetz 32 zugeordnet.

Die Kopplung zwischen dem Sendeempfänger 11 und der Steuereinheit 12 kann einen Steuersignalpfad 14 umfassen, über den ein Steuersignal von einem ersten Signalausgang 11-1 des Sendeempfängers an einen zweiten Signaleingang 12-2 der Steuereinheit übertragen werden kann. Auf den Steuersignalpfad 14 wird an späterer Stelle näher eingegangen werden.

Die Steuereinheit 12 kann einen Mikrocontroller (µC) umfassen. Insbesondere kann die Steuereinheit 12 ein Mikrocontroller sein.

Der erste Signalausgang 11-1 des Sendeempfängers 11 umfasst beispielsweise einen Pin eines LIN-Transceivers und der zweite Signaleingang 12-2 der Steuereinheit 12 umfasst beispielsweise einen Pin eines Mikrocontrollers.

Einerseits ist die Steuereinheit 12 über einen ersten Masseport 121, z.B. ein Pin eines Mikrocontrollers, auf den zweiten Masseanschluss 326 geschaltet. Die entsprechende Verbindungsleitung zwischen der Steuereinheit 12 und dem zweiten Masseanschluss 326 beinhaltet insbesondere besagten zweiten Massekontakt 17b der Steuervorrichtung 1. Andererseits ist vorgesehen, dass die Steuereinheit 12 wenigstens von der ersten Spannungsversorgungsquelle 311 mit Energie versorgt wird. Für diese Zwecke ist beispielsweise ein erster Versorgungspfad 13 vorgesehen, der einen ersten Versorgungsport 122 der Steuereinheit 12, z.B. ein weiterer Pin eines Mikrocontrollers, mit der ersten Spannungsversorgungsquelle 311 verbindet. Insbesondere kann der erste Versorgungspfad 13 mittels des ersten Versorgungskontaktes 16a mit der ersten Spannungsquelle 311 verbunden sein.

Der erste Versorgungspfad 13 kann eine Trennvorrichtung 132 umfassen, die ausgebildet ist, einen Stromfluss im ersten Versorgungspfad 13 wenigstens in einer Stromrichtung zu sperren. Insbesondere ist die Trennvorrichtung 132 ausgebildet, zu verhindern, dass Strom von der Steuereinheit 12 über den ersten Versorgungspfad 13 in das erste Teilnetz 31 fließt, also in Richtung der ersten Spannungsversorgungsquelle 311.

Diese Trennfunktion der Trennvorrichtung 123 kann beispielsweise mittels einer Diode 1321 realisiert werden, deren Anodenanschluss 1321-1 beispielsweise die von der ersten Spannungsversorgungsquelle 311 bereitgestellte erste Versorgungsspannung über den ersten Versorgungskontakt 16a empfängt. Der Diode 1321 kann ein Spannungswandler 131 nachgeschaltet sein. Beispielsweise ist ein Eingang 131-1 des Spannungswandlers 131 mit einem Kathodenanschluss 1321-2 der Diode 1321 verbunden.

Der Spannungswandler 131 kann ausgebildet sein, die von der ersten Spannungsversorgungsquelle 311 bereitgestellte erste Versorgungsspannung in eine Betriebsspannung für die Steuereinheit 12 zu wandeln und diese Betriebsspannung an einem Ausgang 131-2 bereitzustellen, der dem ersten Versorgungsport 122 der Steuereinheit 12 zugeführt ist. Die erste Versorgungsspannung beträgt beispielsweise 12 V, wobei selbstverständlich ist, dass besagte Diode 1321 einen geringfügigen Spannungsabfall, beispielsweise etwa 0,7 V, hervorrufen kann. Selbst eine derart geminderte Spannung entspricht im Wesentlichen noch der ersten Versorgungsspannung, die die erste Spannungsversorgungsquelle 311 bereitgestellt hat. Der Spannungswandler 131 kann beispielsweise einen DC/DC-Wandler umfassen. Insbesondere kann der Spannungswandler 131 auf den ersten Masseanschluss 326 geschaltet sein. Die entsprechende Verbindungsleitung kann wiederum über den zweiten Massekontakt 17b führen.

Insbesondere kann die Diode 1321 einen Verpolschutz für den Kommunikationsschaltungsumfang des ersten Teilnetzes 31 ausbilden.

Um die elektromagnetische Verträglichkeit (EMV) der Steuervorrichtung 1 weiter zu verbessern, kann eine Filteranordnung 19 vorgesehen sein, wie sie schematisch in der Fig. 2 etwas näher dargestellt ist. Die Filtereinrichtung 19 kann ganz oder teilweise innerhalb oder außerhalb des Gehäuses 15 der Steuervorrichtung 1 angeordnet sein.

Die Filtereinrichtung 19 umfasst einen Filterspannungsanschluss 191 und einen Filtermasseanschluss 192. Der Filtermasseanschluss 192 ist bei dem Beispiel entsprechend der Fig. 2 auf den zweiten Massekontakt 17b geschaltet und damit direkt mit dem zweiten Masseanschluss 326 verbunden. Andererseits ist der Filterspannungsanschluss 191 auf den ersten Versorgungskontakt 16a geschaltet und damit direkt mit der ersten Spannungsversorgungsquelle 311 verbunden. Folglich stellt die Filtereinrichtung 19 eine filternde Kopplung zwischen dem ersten Teilnetz 31 und dem zweiten Teilnetz 32 dar.

Die Filtereinrichtung ist beispielsweise ausgebildet, HF-Störungen zwischen dem ersten Teilnetz 31 und dem zweiten Teilnetz 32, welche durch eine HF-Quelle 10 der Steuervorrichtung induziert worden sein können, zu dämpfen. Die HF-Quelle 10 der Steuervorrichtung 1 umfasst beispielsweise besagten Motor 322, besagten Umrichter 323, besagten Treiber 324 und/oder die Steuereinheit 12. Insbesondere der Umrichter 323, der beispielsweise ausgebildet ist, bei einer hohen Schaltfrequenz von mehreren Kilohertz ein Leistungssignal für den Motor 322 bereitzustellen, kann HF-Störungen produzieren, die den Betrieb der Steuervorrichtung 1 negativ beeinflussen können. Um einen derartigen Einfluss zu vermeiden oder wenigstens einzuschränken, ist besagte Filtereinrichtung 19 vorgesehen.

Insbesondere kann die Filtereinrichtung 19 einen Kondensator 193 umfassen, dessen erster Elektrodenanschluss 193-1 mit dem zweiten Massekontakt 17b verbunden sein kann und dessen zweiter Elektrodenanschluss 193-2 mit dem ersten Versorgungskontakt 16a verbunden sein kann. Zusätzlich kann eine Spule 194 vorgesehen sein, die mit dem Kondensator 193 in Serie geschaltet werden kann.

Zur weiteren Verbesserung der EMV-Eigenschaften der Steuervorrichtung 1 können weitere Kondensatoren 195 und 196 bereitgestellt sein, wobei ein erster Elektrodenanschluss 195-1 des Kondensators 195 mit dem ersten Versorgungskontakt 16a verbunden ist und ein zweiter Elektrodenanschluss 195-2 mit dem ersten Massekontakt 17a. Analog dazu kann der weitere Kondensator 196 vorgesehen sein, dessen erster Elektrodenanschluss 196-1 mit dem zweiten Versorgungskontakt 16b verbunden ist und dessen zweiter Elektrodenanschluss 196-2 mit dem zweiten Massekontakt 17b verbunden ist.

Weitere optionale Merkmale der Steuervorrichtung 1 werden im Folgenden vorgestellt:
Die Steuereinheit 12 steuert beispielsweise den Treiber 324 und stellt für diese Zwecke an einem zweiten Signalausgang 12-1 Treibersteuersignale bereit, die der Treiber 324 empfangen kann. Der Treiber 324 wird beispielsweise von der zweiten Spannungsversorgungquelle 321 mit Energie versorgt, wobei in dem entsprechenden Versorgungspfad ein Filter 325 vorgesehen sein kann, insbesondere ein PI-Filter. Der Treiber 324 kann ausgebildet sein, in Abhängigkeit der Treibersteuersignale Umrichtersteuersignale auszugeben und diese dem Umrichter 323 zur Verfügung zu stellen.

Der Umrichter 323 wird beispielsweise ebenfalls von der zweiten Spannungsversorgungsquelle 321 mit Energie versorgt. Der Umrichter 323 kann beispielsweise ausgebildet sein, die zweite Versorgungsspannung in ein Leistungssignal zu wandeln und das Leistungssignal dem Motor 322 zuzuführen. Beispielsweise kann der Umrichter 323 ausgebildet sein, die von der zweiten Spannungsversorgungsquelle 321 bereitgestellte zweite Versorgungsspannung in eine Wechselspannung zu wandeln, beispielsweise in eine ein- oder mehrphasige Wechselspannung. Der Motor 322 kann beispielsweise eingesetzt werden, um eine bewegliche Komponente des Fahrzeugs, in welchem das Mehrspannungsbordnetz 3 installiert ist, zu betreiben, beispielsweise einen verstellbaren Sitz, eine Heckklappe, ein Fenster, und/oder einen Antrieb zur Bewegung des Fahrzeugs selbst. Der Umrichter 323 kann insbesondere über ein Messmittel 320 mit dem zweiten Massekontakt 17b verbunden sein, wobei das Messmittel 320 beispielsweise einen Messwiderstand (Shunt) umfassen kann. Außerdem können die Steuereinheit 12 und/oder der Umrichter 324 ebenfalls mit dem Messmittel 320 verbunden sein.

Die Steuervorrichtung 1 kann ferner besagten Steuersignalpfad 14 umfassen, der den ersten Signalausgang 11-1 des Sendempfängers 11 an den zweiten Signaleingang 12-2 der Steuereinheit 12 koppelt. Der Sendeempfänger 11 und die Steuereinheit 12 sind also über den Steuersignalpfad 14 operativ aneinander gekoppelt. Über den Steuersignalpfad 14, der mehrere Teilpfade umfassen kann, kann der Sendeempfänger 11 der Steuereinheit 12 Steuersignale zur Verfügung stellen und umgekehrt kann die Steuereinheit 12 dem Sendeempfänger 11 Steuersignale zur Weitergabe in das erste Teilnetz 31 zur Verfügung stellen. Beispielsweise sind besagte Teilpfade jeweils als unidirektionale Signalpfade ausgebildet, die die Übertragung von Steuersignalen nur in eine Richtung erlauben.

Der Steuersignalpfad 14 kann ausgebildet sein zum Übertragen eines von dem Sendeempfänger 11 am ersten Signalausgang 11-1 bereitgestellten ersten Steuersignals zum zweiten Signaleingang 12-2 der Steuereinheit 12.

Der Steuersignalpfad 14 kann eine weitere Trennvorrichtung 141 umfassen, die sowohl auf den ersten Masseanschluss 316 als auch auf den zweiten Masseanschluss 326 geschaltet ist, wie es schematisch in der Fig. 1 illustriert ist.

Insbesondere kann die weitere Trennvorrichtung 141 ausgebildet sein, auf eine fehlerhafte Betriebsspannungsversorgung im ersten Teilnetz 31 und/oder im zweiten Teilnetz 32 hin einen sperrenden Zustand einzunehmen, bei dem die Übertragung des Steuersignals von dem ersten Signalausgang 11-1 zu dem zweiten Signaleingang 12-2 über den Steuersignalpfad 14 unterbunden wird.

Die fehlerhafte Betriebsspannungsversorgung liegt beispielsweise dann vor, wenn wenigstens eines des Folgenden zutrifft: Der Sendeempfänger 11 ist nicht mehr auf Masse geschaltet; die Steuereinheit 12 ist nicht mehr auf Masse geschaltet; ein Kurzschluss im ersten Teilnetz 31 und/oder im zweiten Teilnetz 32; oder ein Potentialunterschied zwischen den ersten Masseanschluss 316 und dem zweiten Massenanschluss 326 überschreitet einen Schwellenwert. Die ersten beiden Fehlerfälle werden gelegentlich auch als Masseabriss oder Masseverlust bezeichnet. Der Masseabriss kann beispielsweise aufgrund eines Bruchs in einem Stecker und/oder aufgrund einer Kabeldurchtrennung entstehen. Besagter Schwellenwert beträgt beispielsweise +/- 1V. Ein derartiger Fehlerfall wird auch als Masseversatz bezeichnet. Der Betrag des Schwellenwerts, bei dem die weitere Trennvorrichtung 141 einen sperrenden Zustand einnimmt, kann beispielsweise durch entsprechende Dimensionierung der Komponenten der weiteren Trennvorrichtung 141 festgelegt werden.

Konkrete Beispiele für eine schaltungstechnische Realisierung der weiteren Trennvorrichtung 141 sind in der Offenlegungsschrift DE 10 2013 012615 angegeben, insbesondere in den dortigen Fig. 2 bis 6, auf die hiermit ausdrücklich Bezug genommen wird. Weitere Beispiele für eine schaltungstechnische Realisierung der weiteren Trennvorrichtung 141 sind in der noch nicht veröffentlichten Anmeldung DE 10 2014 221 672 angegeben, insbesondere in den dortigen Fig. 2 bis Fig. 4, sowie in der nicht veröffentlichten Anmeldung DE 10 2015 201 572, insbesondere in den dortigen Fig. 2 bis 4. Auch auf diese Ausführungsbeispiele wird hiermit ausdrücklich Bezug genommen. Folglich kann die weitere Trennvorrichtung 141 der Steuervorrichtung 1 ausgestaltet sein, wie es in den drei vorstehenden Anmeldungen beispielhaft beschrieben ist.

Vorstehend wurde stets das bekannte 12 V / 48 V Mehrspannungsbordnetz eines Fahrzeuges als Beispiel für ein Mehrspannungsbornetz bemüht. Selbstverständlich ist die vorliegende Erfindung jedoch nicht auf derartige Mehrspannungsbordnetze beschränkt. Vielmehr können auch andere Spannungsniveaus als das 12 V-Niveau oder das 48 V-Niveau Anwendung finden.

### Bezugszeichenliste

- 1: Steuervorrichtung

- 10: HF-Quelle
- 11: Sendeempfänger
- 11-1: Erster Signalausgang
- 11-2: Erster Signaleingang
- 111: Zweiter Masseport
- 112: Zweiter Versorgungsport

- 12: Steuereinheit
- 12-1: Zweiter Signalausgang
- 12-2: Zweiter Signaleingang
- 121: Erster Masseport
- 122: Erster Versorgungsport

- 13: Erster Versorgungspfad
- 131: Spannungswandler
- 132: Trennvorrichtung
- 1321: Diode
- 1321-1: Kathodenanschluss der Diode
- 1321-2: Anodenanschluss der ersten Diode

- 14: Steuersignalpfad
- 141: Weitere Trennvorrichtung

- 15: Gehäuse

- 16a: Erster Versorgungskontakt
- 16b: Zweiter Versorgungskontakt
- 17a: Erster Massekontakt
- 17b: Zweiter Massekontakt

- 18: Kommunikationssignalkontakt(e)

- 19: Filtereinrichtung
- 191: Filterspannungsanschluss
- 192: Filtermasseanschluss
- 193: Kondensator
- 193-1: Erster Elektrodenanschluss
- 193-2: Zweiter Elektrodenanschluss
- 194: Spule
- 195: Weiterer Kondensator
- 195-1: Erster Elektrodenanschluss
- 195-2: Zweiter Elektrodenanschluss
- 196: Noch weiterer Kondensator
- 196-1: Erster Elektrodenanschluss
- 196-2: Zweiter Elektrodenanschluss

- 3: Mehrspannungsbordnetz

- 31: Erstes Teilnetz
- 311: Erste Spannungsversorgungsquelle
- 312: Kommunikationskomponente des ersten Teilnetzes
- 316: Erster Masseanschluss

- 32: Zweites Teilnetz
- 320: Messmittel
- 321: Zweite Spannungsversorgungsquelle
- 322: Elektrischer Motor
- 323: Umrichter
- 324: Treiber
- 325: Filter
- 326: Zweiter Masseanschluss

## Patentansprüche

1. Steuervorrichtung (1) für ein Mehrspannungsbordnetz (3) eines Fahrzeugs, wobei das Mehrspannungsbordnetz (3) ein erstes Teilnetz (31) aufweist, das ausgebildet ist, von einer ersten Spannungsversorgungsquelle (311) mit einer ersten Versorgungsspannung betrieben zu werden, und ein zweites Teilnetz (32), das ausgebildet ist, von einer zweiten Spannungsversorgungsquelle (321) mit einer zweiten Versorgungsspannung betrieben zu werden, wobei die zweite Versorgungsspannung größer ist als die erste Versorgungsspannung; die Steuervorrichtung (1) umfassend:
- einen Sendeempfänger (11), der über einen ersten Masseanschluss (316) des ersten Teilnetzes (31) auf Masse geschaltet ist und wenigstens von der ersten Spannungsversorgungsquelle (311) mit Energie versorgt wird, und der ausgebildet ist zum Kommunizieren mit einer Kommunikationskomponente (312) des ersten Teilnetzes (31);
- eine Steuereinheit (12), die über einen zweiten Masseanschluss (326) des zweiten Teilnetzes (32) auf Masse geschaltet ist, und die ausgebildet ist zum Steuern einer Leistungskomponente (322, 323, 324) des zweiten Teilnetzes (32), wobei der erste Masseanschluss (316) und der zweite Masseanschluss (326) getrennt voneinander angeordnet sind;
**dadurch gekennzeichnet, dass**
- die Steuereinheit (12) wenigstens von der ersten Spannungsversorgungsquelle (311) mit Energie versorgt wird.

2. Steuervorrichtung (1) nach Anspruch 1, **dadurch gekennzeichnet, dass** die Steuereinheit (12) einen Mikrocontroller umfasst.

3. Steuervorrichtung (1) nach einem der vorstehenden Ansprüche, **dadurch gekennzeichnet, dass** die Steuereinheit (12) einen ersten Masseport (121) umfasst, der auf den zweiten Masseanschluss (326) geschaltet ist.

4. Steuervorrichtung (1) nach einem der vorstehenden Ansprüche, **dadurch gekennzeichnet, dass** die Steuereinheit (12) einen ersten Versorgungsport (122) umfasst, der über einen ersten Versorgungspfad (13) mit der ersten Spannungsversorgungsquelle (311) verbunden ist.

5. Steuervorrichtung (1) nach Anspruch 4, **dadurch gekennzeichnet, dass** der erste Versorgungspfad (13) einen Spannungswandler (131) umfasst, der ausgebildet ist, die erste Versorgungsspannung zu empfangen und in eine Betriebsspannung für die Steuereinheit (12) zu wandeln und die Betriebsspannung am ersten Versorgungsport (122) der Steuereinheit (12) bereitzustellen.

6. Steuervorrichtung (1) nach Anspruch 5, **dadurch gekennzeichnet, dass** der Spannungswandler (131) auf den zweiten Masseanschluss (326) geschaltet ist.

7. Steuervorrichtung (1) nach einem der vorstehenden Ansprüche 4 bis 6, **dadurch gekennzeichnet, dass** der erste Versorgungspfad (13) eine Diode (1321) umfasst.

8. Steuervorrichtung (1) nach Anspruch 7, **dadurch gekennzeichnet, dass** ein Anodenanschluss (1321-1) der Diode (1321) die erste Versorgungsspannung empfängt.

9. Steuervorrichtung (1) nach einem der vorstehenden Ansprüche 4 bis 8, **dadurch gekennzeichnet, dass** der erste Versorgungspfad (13) eine Trennvorrichtung (132) umfasst, wobei die Trennvorrichtung (132) ausgebildet ist, einen Stromfluss im ersten Versorgungspfad (13) wenigstens in einer Stromrichtung zu sperren.

10. Steuervorrichtung (1) nach Anspruch 9 und nach Anspruch 7 oder 8, **dadurch gekennzeichnet, dass** die Trennvorrichtung (132) die Diode (1321) umfasst.

11. Steuervorrichtung (1) nach einem der vorstehenden Ansprüche, **dadurch gekennzeichnet, dass** die Steuervorrichtung (1) umfasst:
- einen ersten Versorgungskontakt (16a) zum Empfangen der ersten Versorgungsspannung;
- einen zweiten Versorgungskontakt (16b) zum Empfangen der zweiten Versorgungsspannung;
- einen ersten Massekontakt (17a), der mit dem ersten Masseanschluss (316) verbunden ist;
- einen zweiten Massekontakt (17b), der mit dem zweiten Masseanschluss (326) verbunden ist.

12. Steuervorrichtung (1) nach Anspruch 11, **dadurch gekennzeichnet, dass** die Steuervorrichtung (1) eine Filtereinrichtung (19) umfasst, wobei die Filtereinrichtung (19)
- über einen Filterspannungsanschluss (191) an den ersten Versorgungskontakt (16a) angeschlossen ist und über einen Filtermasseanschluss (192) an den zweiten Massekontakt (17b) angeschlossen ist; oder
- über den Filterspannungsanschluss (191) an den zweiten Versorgungskontakt (16b) angeschlossen ist und über einen Filtermasseanschluss (192) an den ersten Massekontakt (17a) angeschlossen ist.

13. Steuervorrichtung (1) nach Anspruch 12, **dadurch gekennzeichnet, dass** die Filtereinrichtung (19) ausgebildet ist, HF-Störungen zwischen dem ersten Teilnetz (31) und dem zweiten Teilnetz (32), welche durch eine HF-Quelle (10) der Steuervorrichtung (1) induziert worden sind, zu dämpfen.

## Claims

1. A control device (1) for a multi-voltage electrical system (3) of a vehicle, wherein the multi-voltage vehicle electrical system (3) includes a first subsystem (31) which is formed to be operated by a first voltage supply source (311) with a first supply voltage, and a second subsystem (32) which is formed to be operated by a second voltage supply source (321) with a second supply voltage, wherein the second supply voltage is greater than the first supply voltage; the control device (1) comprising:
- a transceiver (11) which is connected to ground via a first ground terminal (316) of the first subsystem (31) and is supplied with energy at least by the first voltage supply source (311), and which is formed to communicate with a communication component (312) of the first subsystem (31);
- a control unit (12) which is connected to ground via a second ground terminal (326) of the second subsystem (32), and which is formed to control a power component (322, 323, 324) of the second subsystem (32), wherein the first ground terminal (316) and the second ground terminal (326) are arranged separate from each other;
**characterized in that**
- the control unit (12) is supplied with energy at least by the first voltage supply source (311).

2. The control device (1) according to claim 1, **characterized in that** the control unit (12) comprises a microcontroller.

3. The control device (1) according to any of the preceding claims, **characterized in that** the control unit (12) comprises a first ground port (121) which is connected to the second ground terminal (326).

4. The control device (1) according to any of the preceding claims, **characterized in that** the control unit (12) comprises a first supply port (122) which is connected with the first voltage supply source (311) via a first supply path (13).

5. The control device (1) according to claim 4, **characterized in that** the first supply path (13) comprises a voltage converter (131) which is formed to receive the first supply voltage and convert the same into an operating voltage for the control unit (12) and to provide the operating voltage at the first supply port (122) of the control unit (12).

6. The control device (1) according to claim 5, **characterized in that** the voltage converter (131) is connected to the second ground terminal (326).

7. The control device (1) according to any of the preceding claims 4 to 6, **characterized in that** the first supply path (13) comprises a diode (1321).

8. The control device (1) according to claim 7, **characterized in that** an anode terminal (1321 -1) of the diode (1321) receives the first supply voltage.

9. The control device (1) according to any of the preceding claims 4 to 8, **characterized in that** the first supply path (13) comprises a separating device (132), wherein the separating device (132) is formed to block a current flow in the first supply path (13) at least in one flow direction.

10. The control device (1) according to claim 9 and according to claim 7 or 8, **characterized in that** the separating device (132) comprises the diode (1321).

11. The control device (1) according to any of the preceding claims, **characterized in that** the control device (1) comprises:
- a first supply contact (16a) for receiving the first supply voltage;
- a second supply contact (16b) for receiving the second supply voltage;
- a first ground contact (17a) which is connected with the first ground terminal (316);
- a second ground contact (17b) which is connected with the second ground terminal (326).

12. The control device (1) according to claim 11, **characterized in that** the control unit (1) comprises a filter device (19), wherein the filter device (19)
- is connected to the first supply contact (16a) via a filter voltage terminal (191) and is connected to the second ground contact (17b) via a filter ground terminal (192); or
- is connected to the second supply contact (16b) via the filter voltage terminal (191) and is connected to the first ground contact (17a) via a filter ground terminal (192).

13. The control device (1) according to claim 12, **characterized in that** the filter device (19) is formed to attenuate HF interferences between the first subsystem (31) and the second subsystem (32), which have been induced by a HF source (10) of the control device (1).

## Revendications

1. Dispositif de commande (1) pour un réseau de bord multitension (3) d'un véhicule, le réseau de bord multitension (3) possédant un premier réseau partiel (31) qui est configuré pour fonctionner à partir d'une première source d'alimentation électrique (311) ayant une première tension d'alimentation et un deuxième réseau partiel (32) qui est configuré pour fonctionner à partir d'une deuxième source d'alimentation électrique (321) ayant une deuxième tension d'alimentation, la deuxième tension d'alimentation étant supérieure à la première tension d'alimentation ; le dispositif de commande (1) comprenant :
- un émetteur-récepteur (11) qui est connecté à la masse par le biais d'une première borne de masse (316) du premier réseau partiel (31) et qui est alimenté en énergie au moins par la première source d'alimentation électrique (311) et qui est configuré pour communiquer avec un composant de communication (312) du premier réseau partiel (31) ;
- une unité de commande (12) qui est connectée à la masse par le biais d'une deuxième borne de masse (326) du deuxième réseau partiel (32) et qui est configurée pour commander un composant de puissance (322, 323, 324) du deuxième réseau partiel (32),
la première borne de masse (316) et la deuxième borne de masse (326) étant disposées de manière séparée l'une de l'autre ;
**caractérisé en ce que**
- l'unité de commande (12) est alimentée en énergie au moins par la première source d'alimentation électrique (311) .

2. Dispositif de commande (1) selon la revendication 1, **caractérisé en ce que** l'unité de commande (12) comprend un microcontrôleur.

3. Dispositif de commande (1) selon l'une des revendications précédentes, **caractérisé en ce que** l'unité de commande (12) comprend un premier port de masse (121) qui est connecté à la deuxième borne de masse (326).

4. Dispositif de commande (1) selon l'une des revendications précédentes, **caractérisé en ce que** l'unité de commande (12) comprend un premier port d'alimentation (122) qui est relié à la première source d'alimentation électrique (311) par le biais d'un premier chemin d'alimentation (13).

5. Dispositif de commande (1) selon la revendication 4, **caractérisé en ce que** le premier chemin d'alimentation (13) comprend un convertisseur de tension (131) qui est configuré pour recevoir la première tension d'alimentation et la convertir en une tension de service pour l'unité de commande (12) et délivrer la tension de service au niveau du premier port d'alimentation (122) de l'unité de commande (12).

6. Dispositif de commande (1) selon la revendication 5, **caractérisé en ce que** le convertisseur de tension (131) est connecté à la deuxième borne de masse (326).

7. Dispositif de commande (1) selon l'une des revendications précédentes 4 à 6, **caractérisé en ce que** le premier chemin d'alimentation (13) comprend une diode (1321).

8. Dispositif de commande (1) selon la revendication 7, **caractérisé en ce qu'**une borne d'anode (1321-1) de la diode (1321) reçoit la première tension d'alimentation.

9. Dispositif de commande (1) selon l'une des revendications précédentes 4 à 8, **caractérisé en ce que** le premier chemin d'alimentation (13) comprend un dispositif de sectionnement (132), le dispositif de sectionnement (132) étant configuré pour bloquer un flux de courant dans le premier chemin d'alimentation (13) au moins dans un sens du courant.

10. Dispositif de commande (1) selon la revendication 9 et selon la revendication 7 ou 8, **caractérisé en ce que** le dispositif de sectionnement (132) comprend la diode (1321).

11. Dispositif de commande (1) selon l'une des revendications précédentes, **caractérisé en ce que** le dispositif de commande (1) comprend :
- un premier contact d'alimentation (16a) destiné à recevoir la première tension d'alimentation ;
- un deuxième contact d'alimentation (16b) destiné à recevoir la deuxième tension d'alimentation ;
- un premier contact de masse (17a) qui est relié à la première borne de masse (316) ;
- un deuxième contact de masse (17b) qui est relié à la deuxième borne de masse (326).

12. Dispositif de commande (1) selon la revendication 11, **caractérisé en ce que** le dispositif de commande (1) comprend un appareil filtrant (19), l'appareil filtrant (19)
- étant raccordé au premier contact d'alimentation (16a) par le biais d'une borne de tension de filtre (191) et au deuxième contact de masse (17b) par le biais d'une borne de masse de filtre (192) ; ou
- étant raccordé au deuxième contact d'alimentation (16b) par le biais de la borne de tension de filtre (191) et au premier contact de masse (17a) par le biais d'une borne de masse de filtre (192).

13. Dispositif de commande (1) selon la revendication 12, **caractérisé en ce que** l'appareil filtrant (19) est configuré pour atténuer des perturbations HF entre le premier réseau partiel (31) et le deuxième réseau partiel (32), lesquelles ont été induites par une source HF (10) du dispositif de commande (1) .
